**Europäisches Patentamt**

**European Patent Office**

**Office européen des brevets**

(11) Publication number: **0 074 822**
**B1**

## (12) EUROPEAN PATENT SPECIFICATION

(45) Date of publication of patent specification: **18.03.87**

(21) Application number: **82304782.4**

(22) Date of filing: **10.09.82**

(51) Int. Cl.⁴: **G 10 L 9/08, G 10 L 9/18**

(54) Recognition of speech or speech-like sounds.

(30) Priority: **11.09.81 JP 144449/81**

(43) Date of publication of application:
**23.03.83 Bulletin 83/12**

(45) Publication of the grant of the patent:
**18.03.87 Bulletin 87/12**

(84) Designated Contracting States:
**DE FR GB IT**

(56) References cited:
**DE-A-3 101 851**
**FR-A-2 337 393**
**US-A-4 059 725**

**IEEE TRANSACTIONS ON COMMUNICATIONS, vol. COM-29, no. 5, May 1981, pages 621-659, New York (USA); L. R. RABINER et al.: "Isolated and connected word recognition- theory and selected applications"**

**IEEE TRANSACTIONS ON AUDIO AND ELECTROACOUSTICS, vol. AU-16, no. 2, June 1968, pages 235-239, New York (USA); R. F. PURTON: "Speech recognition using autocorrelation analysis".**

(73) Proprietor: **SHARP KABUSHIKI KAISHA**
**22-22 Nagaike-cho Abeno-ku**
**Osaka 545 (JP)**

(72) Inventor: **Hakaridani, Mitsuhiro**
**856-12 Kidera-cho**
**Nara-shi Nara-ken (JP)**
Inventor: **Iwahashi, Hiroyuki**
**3-3-74 Shijooji**
**Nara-shi Nara-ken (JP)**
Inventor: **Nishioka, Yoshiki**
**160-19 Shoji-cho**
**Tenri-shi Nara-ken (JP)**

(74) Representative: **Wright, Peter David John et al**
**R.G.C. Jenkins & Co. 12-15, Fetter Lane**
**London EC4A 1PL (GB)**

(56) References cited:
**THE BELL SYSTEM TECHNICAL JOURNAL, vol. 60, no. 5, May-June 1981, pages 739-765, Murray Hill, (USA); L. R. RABINER et al.: "A two-pass pattern-recognition approach to isolated word recognition".**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to a method of sound recognition.

It is customary in the art of speech recognition that speech-like sounds or words (having been detected and their features extracted) are compared with reference patterns for a large number of words which have been registered in advance, and are identified through DP (Dynamic Programming) matching or other methods. An attempt to perform recognition using all the reference patterns for the large number of words and recognize them with high accuracy requires a long time and special-purpose high speed hardware is necessary to shorten the time taken for recognition. Alternatively, a simple and timesaving recognition method is employed in which the number of words sought to be recognized is limited. In either case, the prior art system is still imperfect; the use of the special-purpose hardware makes a speech recognition system expensive; and the use of the simple recognition method leads to a decline in recognition rate and limiting the number of the words sought to be recognized limits the scope of application of the speech recognition system.

A so-called preliminary selection of preverification may be carried out to limit the number of object words for recognition prior to execution of a recognition step using the DP matching method or the like.

Several ways of preliminary selection are well known. For instance, a method is reported by which feature parameters characteristic of the lengths of words and the spectra of the beginning and ending of words are used. This method, however, is not suited for simple type speech recognition systems because it involves a complex operation and requires the feature parameters for preliminary selection to be set up.

Another method of such preliminary selection is also reported in which approximately 10 samples are extracted in an interval from a time series of feature vectors to set up pattern vectors of about 50 degrees and the number of object words for the later recognition step is limited to 20% through verification by linear sampling. This method is not suitable for simple type speech recognition systems either.

A further example of preliminary selection is given in the Bell System Technical Journal Volume 60 No. 5 (May—June 1981) pages 739—765 "A Two-Pass Pattern Recognition Approach to Isolated Word Recognition" by Rabiner and Wilpon. However, the object of the system described here is to improve accuracy when several of the object words are divided into groups and in a first pass an unweighted distance is used to select one of these groups. The second pass uses a weighted distance to select between the object words contained in the group selected in the first pass. The system is not stated to improve recognition time.

According to the present invention there is provided a method of sound recognition in which, during a pre-recognition step, an input sound signal is compared with a plurality of reference patterns in order to select therefrom a plurality of candidates, and in which, during a more accurate determination step, a further selection is made from said plurality of candidates, characterised in that

in both the pre-recognition step and in the more accurate determination step values obtained from self-correlation functions for the input sound signal are used, but there are used in the said more accurate determination step values obtained from self-correlation functions of a higher order than the self-correlation functions from which are obtained the values used in the said pre-recognition step. Typically the self-correlation functions from which the values used in the said pre-recognition step are of orders no higher than the third.

Thus the preliminary selection uses part of the data for the later determination step.

Preferably the input sound signal is divided into frames and the said comparison is made between said values associated with each of a plurality of input sound signal frames and respective frame values of the reference patterns, the derivation of the said values associated with the input sound signal frames including a process of time axis normalisation applied to the input sound signal. It is also preferred if the said self-correlation functions are normalised with respect to the zero order self-correlation function.

In a preferred embodiment, the present invention provides a method of speech recognition comprising the steps of creating self-correlation functions for input sound signals, deciding the intervals of the sound signals, normalizing the time axis in conjunction with the sound intervals, and conducting recognition of words or the like by using the self-correlation functions as feature parameters to decide whether there is matching with reference patterns, said method further comprising the step of effecting preliminary selection by means of linear matching using said self-correlation functions of lower degrees.

It is known to use auto-correlation techniques in speech recognition. This is mentioned in IEEE Transactions on Audio and Electroacoustics Volume AU-16 No. 2 (June 1968) pages 235 to 239 "Speech Recognition Using Autocorrelation Analysis" by R. F. Purton.

An embodiment of the present invention, given by way of non-limitative example, will now be described with reference to the accompanying drawings, in which:

Figure 1 is a flow diagram of a recognition process embodying the present invention;

Figure 2 is an illustration of an example of time axis normalization;

Figure 3 is an illustration of variations in self-correlation functions against number of degrees; and

Figure 4 is an illustration of primary self-correlation functions.

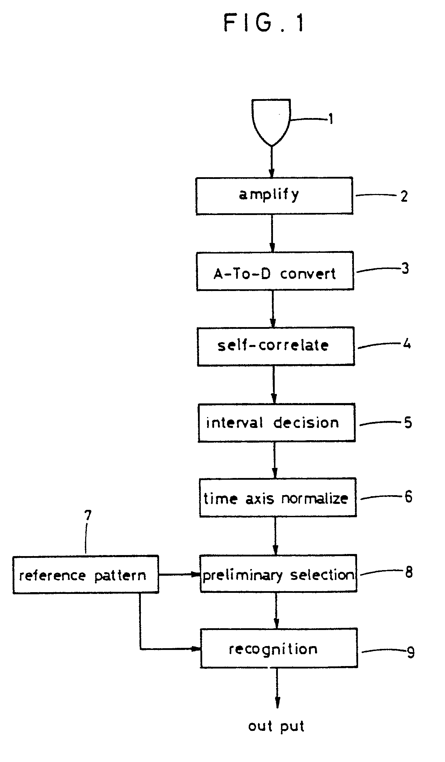

Referring now to Figure 1, there is illustrated a flow diagram of a speech recognition process embodying the present invention. Sound inputs introduced via a microphone (step 1) are amplified in an amplifier (step 2) and converted into digital signals by an analog-to-digital converter (step 3). Self-correlation functions are set up by a self-correlation circuit (step 4). These steps are accomplished mainly by hardware and are carried out to complete feature extraction from the sound inputs.

Thereafter, the intervals of the sound inputs are decided (step 5) and the time axis is normalized to expand or compress these intervals into a predetermined number of frames (step 6). Preliminary selection is carried out with reference patterns (step 7) by means of self-correlation functions of lower degrees (step 8) to thereby limit the number of object words for recognition to a suitable number. Fine recognition is then conducted with preliminary selected reference patterns by use of DP matching or other methods (step 9). The results of such recognition are output. The steps from the decision as to the intervals of the sound inputs (step 5) through to the final recognition (step 9) are accomplished mainly by software.

The respective steps in Figure 1 will be described in more detail. The amplifier (step 2) has a frequency characteristic of 6 dB/oct. In the light of the fact that the higher frequencies in the frequency spectra of the vocal cords the lower energy, this offers a correction that results in as constant a level of energy as possible.

The sound inputs or analog signals are converted into the digital signals by the analog-to-digital converter (step 3). For recognition of speech or speech-like sounds, the signals are generally sampled at a frequency of between 8 and 24 KHz into samples each represented by the digital signals of 6 to 12 bits. In an example given herein, the sampling frequency is 8 KHz and the representation of the digital signals consists of 8 bits.

The self-correlation circuit 4 evaluates the self-correlation function φ(m) as follows:

$$\phi(m) = \sum_{n=0}^{N-1} \chi(n)\chi(n+m)$$

where χ(n) is the sample value from the analog-to-digital converter 3, m is the number of degree of the self-correlation function, and N is the number of the samples in a frame. φ(0) (i.e. m=0) is the square of the sample value, i.e., the power of voice. φ(1) is the linear self-correlation function, φ(2), φ(3) and so forth are the quadratic, cubic and so forth self-correlation functions. The self-correlation functions of up to 24th degree are generally used as feature parameters for recognition of speech or speech-like sound and the number of necessary degrees is dependent upon the sampling frequency. However, those of up to the eighth degree are used in the illustrated example.

The length of the interval where the self-correlation functions φ(m) are evaluated, i.e., the width of frames, is determined by N and the sampling frequency and is generally selected to be within 8 to 30 msec. In the illustrated example, N=128 and the sampling frequency is 8 KHz so that the frame width is 16 msec. The self-correlation functions of 0th to 8th degrees thus calculated are represented by 16 bit digital numbers. Since the self-correlation functions φ(m) thus calculated vary with the amplitude of the sound inputs, the self-correlation functions φ(m) are normalized with respect to φ(0) so as to avoid the effect of such variation. That is, preliminary selection and recognition are effected using the self-correlation functions R(m) which are evaluated below:

$$R(m) = \frac{\phi(m)}{\phi(0)}$$

There are several ways available for determination of the intervals of the sound inputs. While the intended task may be achieved through any one of those ways, the beginning and ending of words are sensed to determine the intervals of the sound inputs based only upon the power φ(0) in the illustrated example. The length of words is suitably selected and typically it is selected to have between 13 and 96 frames (that is, time conversion shows that it lasts for 0.2 to 1.5 sec).

The sound inputs passing through all of the foregoing steps include patterns of different lengths covering from 13 frames to 96 frames. If those patterns are loaded into a memory as they are, then not only a memory of a large capacity is necessary but also matching processes among patterns of unequal lengths becomes more complex. To avoid this normalization of the respective intervals of the sound inputs is necessary along the time axis. The time axis normalization expands or compresses the patterns of different lengths into those of a suitable uniform length. Although various ways of expansion and compression are available for this purpose, linear expansion and compression is used to normalize those patterns into 16 frames in the illustrated example.

Assume now input being treated as a voice input has a number of frames l with respective feature vectors $\vec{a}(i)$. The relation between $\vec{a}(i)$ and $\vec{b}(r)$ is selected as follows where $\vec{b}(r)$ is the feature vector of a signal obtained from time axis normalization.

(1) The first frame $\vec{b}(1)$ of the normalized signal is the average of $\vec{a}(1)$ and $\vec{a}(2)$. In other words,

$$\vec{b}(1) = \frac{a(1)+a(2)}{2}$$

(2) The remaining frames (I−1) of the original sound input are segmented into 15 intervals and the average of the feature vector $\overline{a}(i)$ of the leading frame in each of these frames and the feature vector $\overline{a}(i+1)$ in the next succeeding frame is made equal to the feature vector $\overline{b}(r)$ in the frames of the normalized signals. In other words,

$$\overline{b}(r)=\frac{\overline{a}(i)+\overline{a}(i+1)}{2}.$$

(r=2 to 16)

The relation between i and r is as follows:

$$i=\frac{(r-2)(I-1)}{16}+2$$

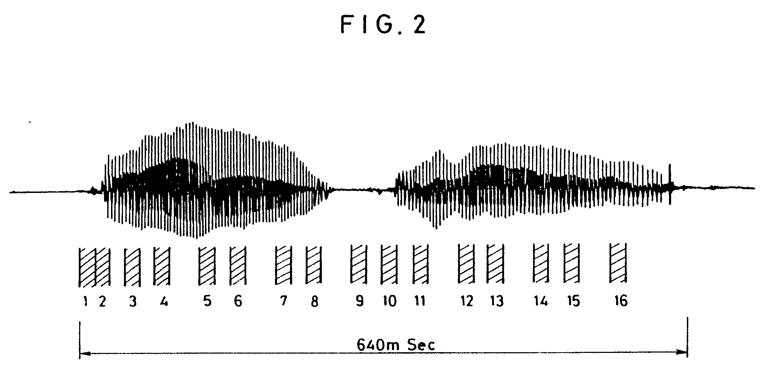

An example of expansion and compression of frames is depicted in Figure 2 when a voice input "TOKYO" is normalized along its time axis. Within the interval of the voice input "TOKYO" (typically, 640 msec) there are 40 frames with a frame width of 16 msec. Should the 40 frames be reduced to 16 frames, those frames defined by the oblique lines in Figure 2 are selected and the average of the self-correlation function feature vector $\overline{a}(i)$ of those frames and the feature vector $\overline{a}(i+1)$ of the next adjacent frames is equal to the feature vector $\overline{b}(r)$ (r=1—16) of the normalized input consisting of 16 frames.

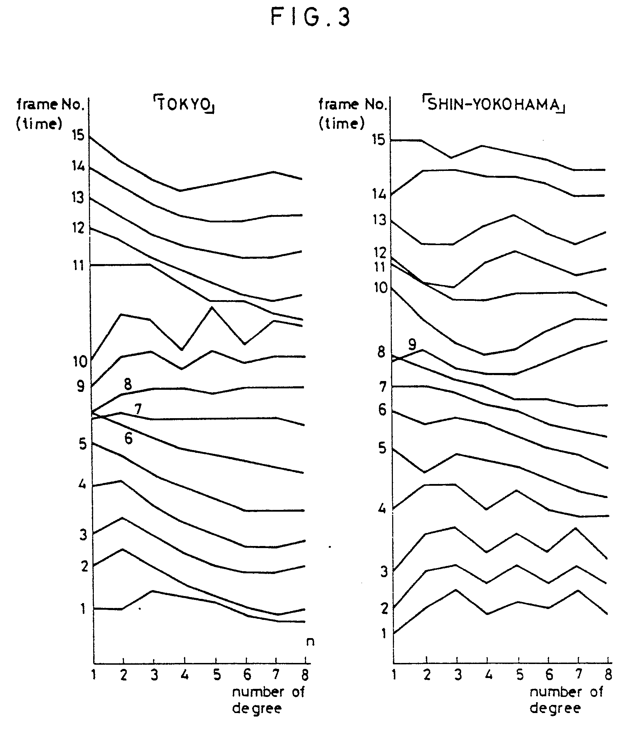

Figure 3 depicts variations in the self-correlation functions of the 1st to 8th degrees for the sound inputs with a normalized time axis in the 1st to 16th frames when the sound inputs are "TOKYO" and "SHINYOKOHAMA", respectively.

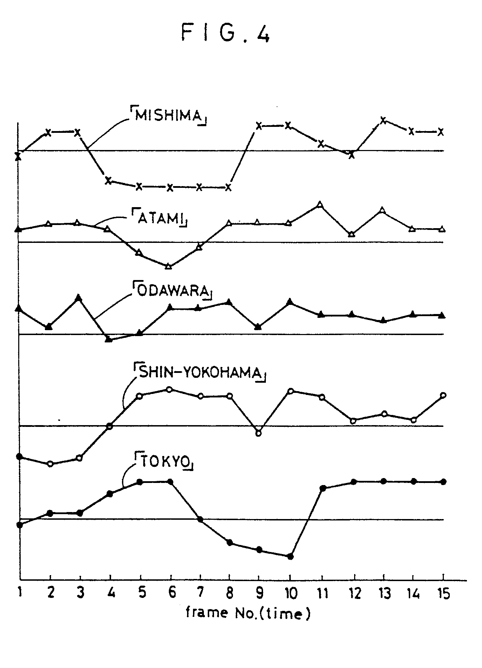

In the illustrated embodiment, the self-correlation functions of lower degrees (for instance, linear to cubic) are selected for the preliminary selection from the self-correlation functions of the sound inputs. Figure 4 shows the linear self-correlation functions in time sequence or the order of frame numbers for five different kinds of normalized sound inputs.

The preliminary selection is carried out by matching between these lower degree self-correlation functions for the sound inputs and reference patterns composed of lower degree self-correlation functions of sound inputs as registered in advance. When using the linear self-correlation functions, the distance $D_K$ between the sound input and (K)th reference pattern is evaluated as follows where $b_1(r)$ is the self-correlation function of the sound input in (r)th frame and $C_{K1}(r)$ is the self-correlation function of (K)th reference pattern in (r)th frame.

$$D_K=\sum_{r=1}^{16} |b_1(r)-C_{K1}(r)|$$

Out of the resultant distances D for the number of the reference patterns (for instance, 32 patterns in the illustrated example), a suitable number is selected beginning with the shortest one (16 patterns in the illustrated example).

Recognition and acknowledgement are effected between the sound inputs and all of the preliminary selected reference patterns. Although various ways of recognition and acknowledgement are available, the well-known DP matching method using all of the self-correlation functions of the 1st to 8th degrees is employed in the illustrated embodiment.

The illustrated embodiment is adapted to see if there is DP matching between the sound input B bearing the time axis normalized feature vectors and the reference patterns C where B and C are as follows:

$$B=b_{(1)}b_{(2)} \ldots b_{(i)} \ldots b_{(16)}$$

$$C_K=C_{K(1)}C_{K(2)} \ldots C_{K(j)} \ldots C_{K(16)}$$

It is noted that $C_K$ is (K)th reference pattern. The matching window condition is as follows:

$$|i-j|\leqq 1$$

The partial sum g(i, j) of the distance between the sound input B and the reference pattern C is defined below:

$$g(i, j)=\min \begin{pmatrix} 2d(i, j)+g(i-1, j-1) \\ d(i, j)+g(i, j-1) \\ d(i, j)+g(i-1, j) \end{pmatrix}$$

$$d(i, j)= \sum_{m=1}^{8} |b_m(i)-C_{Km}(j)|$$

where $b_m(i)$ is (m)th self-correlation function of the sound input B in (i)th frame and $C_{Km}(j)$ is (m)th self-correlation function of (K)th reference pattern in (j)th frame.

It is appreciated that the distance g (16, 16) traversing the path for the minimum of the partial sum corresponds to the distance between the sound input B and the (K)th reference pattern $C_K$. The distance g (16, 16) is evaluated for all of the preliminary selected ones of the reference patterns and the reference pattern that gives the minimum distance is acknowledged as equivalent to the sound input B.

As noted earlier, this speech recognition system does not require set up of new feature parameters for the preliminary selection and offers an effective tool in putting compact type speech recognition systems into practice because it takes advantage of the self-correlation functions which are already required for the final recognition step.

Whereas the present invention has been described with respect to specific embodiments thereof, it will be understood that various changes and modifications will be suggested to one skilled in the art.

## Claims

1. A method of sound recognition in which, during a pre-recognition step, an input sound signal is compared with a plurality of reference patterns in order to select therefrom a plurality of candidates, and in which, during a more accurate determination step, a further selection is made from said plurality of candidates, characterised in that

in both the pre-recognition step and in the more accurate determination step values obtained from self-correlation functions for the input sound signal are used, but there are used in the said more accurate determination step values obtained from self-correlation functions of a higher order than the self-correlation functions from which are obtained the values used in the said pre-recognition step.

2. A method according to claim 1 in which the self-correlation functions from which are obtained the values used in the said pre-recognition step are of the orders no higher than the third.

3. A method according to claim 1 or claim 2 in which values obtained from self-correlation functions of orders at least as high as the eighth are used in the said full-recognition step.

4. A method according to any one of claims 1 to 3, in which DP matching is used in the said full-recognition step.

5. A method according to any one of the preceding claims in which the input sound signal is divided into frames and the said comparison is made between said values associated with each of a plurality of input sound signal frames and respective frame values of the reference patterns, the derivation of the said values associated with the input sound signal frames including a process of time axis normalisation applied to the input sound signal.

6. A method according to any one of the preceding claims in which the said self-correlation functions are normalised with respect to the zero order self-correlation function.

## Patentansprüche

1. Verfahren zur Lauterkennung, bei dem während einer Vorerkennungsstufe mit Auswahl mehrerer Kandidaten ein eingegebenes Lautsignal gegen eine Mehrzahl von Referenzmustern verglichen und während einer genaueren Bestimmungsstufe eine weitere Auswahl aus der Mehrzahl der Kandidaten getroffen wird,

dadurch gekennzeichnet, daß sowohl während der Vorerkennung als auch während der genaueren Bestimmung aus Selbstkorrelationsfunktionen für das eingegebene Signal gewonnene Werte, jedoch für die genauere Bestimmung aus Selbstkorrelationsfunktionen höherer Ordnung gewonnene Werte verwendet werden als jene Selbstkorrelationsfunktionen, aus denen im Laufe der Vorerkennung verwendete Werte erzielt werden.

2. Verfahren nach Anspruch 1, bei dem die Selbstkorrelationsfunktionen, aus denen die in der Vorerkennungsstufe verwendeten Werte erzielt werden, von nicht höherer als dritter Ordnung sind.

3. Verfahren nach Anspruch 1 oder 2, bei dem in der Vollerkennungsstufe Werte verwendet werden, die aus Selbstkorrelationsfunktionen von mindestens achter Ordnung gewonnen werden.

4. Verfahren nach wenistens einem der Ansprüche 1 bis 3, bei dem DP (Dynamic Programming)-Anpassung in der Vollerkennungsstufe eingesetzt wird.

5. Verfahren nach einem der vorstehenden Ansprüche, bei dem das Eingangs-Lautsignal in Rahmen unterteilt wird und der Vergleich zwischen den jeweils einem aus einer Mehrzahl von Eingangs-Tonsignalrahmen zugeordneten Werten und entsprechenden Rahmenwerten der Referenzmuster vorgenommen wird, wobei die Ableitung der den Eingangs-Lautsignalrahmen zugeordneten Werte eine auf das Eingangs-Lautsignal angewendete Zeitachsennormalisierung einschließt.

6. Verfahren nach einem der vorstehenden Ansprüche, bei dem die Selbstkorrelationsfunktionen in bezug auf die Selbstkorrelationsfunktion nullter Ordnung normalisiert sind.

## Revendications

1. Procédé de reconnaissance d'un son, selon lequel, au cours d'une étape de pré-reconnaissance, on compare un signal sonore d'entrée à plusieurs modèles de référence pour sélectionner parmi ceux-ci un groupe d'échantillons possibles et selon lequel, lors d'une étape de détermination plus précise, on procède à une sélection supplémentaire parmi le groupe d'échantillons possibles, caractérisé en ce que,

dans l'une et l'autre des étapes de pré-reconnaissance et de détermination plus précise on utilise des valeurs déduites de fonctions d'auto-corrélation mises en oeuvre sur le signal sonor d'entrée mais, dans ladite étape de détermination plus précise, on utilise des valeurs déduites de fonctions d'auto-corrélation d'un ordre supérieur à celui des fonctions d'auto-corrélation par lesquelles sont obtenues les valeurs employées dans ladite étape de pré-reconnaissance.

2. Procédé suivant la revendication 1, selon lequel les fonctions d'auto-corrélation par lesquelles sont obtenues les valeurs employées dans ladite étape de pré-reconnaissance sont d'un ordre non-supérieur au troisième.

3. Procédé suivant la revendication 1 ou la revendication 2, selon lequel des valeurs déduites de fonctions d'auto-corrélation d'un ordre atteignant au moins le huitième, sont utilisées dans ladite étape de reconnaissance totale.

4. Procédé suivant l'une quelconque des revendications 1 à 3, selon lequel la méthode de coïncidence PD est mise en oeuvre dans ladite étape de reconnaissance totale.

5. Procédé suivant l'une quelconque des revendications précédentes, selon lequel le signal sonore d'entrée est subdivisé en trames et ladite comparaison est effectuée entre lesdites valeurs associées à chacune des trames constituant le signal sonore d'entrée et des valeurs de trames respectives des modèles de référence, le calcul des dérivées desdites valeurs associées aux trames du signal sonore d'entrée incluant une opération de normalisation de l'axe des temps appliquée au signal sonore d'entrée.

6. Procédé suivant l'une quelconque des revendications précédentes, selon lequel lesdites fonctions d'auto-corrélation sont normalisées par rapport à la fonction d'auto-corrélation d'ordre zéro.

# FIG. 1

amplify ——— 2

A-To-D convert ——— 3

self-correlate ——— 4

interval decision ——— 5

time axis normalize ——— 6

reference pattern ——— 7

preliminary selection ——— 8

recognition ——— 9

out put

1

F I G. 2

# F I G . 3

frame No. (time) — 「TOKYO」

frame No. (time) — 「SHIN-YOKOHAMA」

number of degree

number of degree

# F I G . 4

frame No.(time)